# EUROPEAN PATENT APPLICATION

(11) **EP 3 415 211 A1**
(43) Date of publication of application: **19.12.2018**
(21) Application number: 18177653.5
(22) Date of filing: 14.06.2018
(51) Int. Cl.: A63F 13/98, A63F 13/92, A63F 13/212, G06F 1/16, H04M 1/02

(54) **USER ASSISTANCE DEVICE AND PORTABLE APPARATUS WITH THE SAME**

(30) Priority: 15.06.2017 JP 2017117894
(71) Applicant: Nintendo Co., Ltd., Kyoto 601-8501 (JP)
(72) Inventor: IKEDA, Kenichi, Kyoto, 601-8501 (JP); MARUYAMA, Kazuhiro, Kyoto, 601-8501 (JP)
(74) Representative: Karl, Christof

(57) **Abstract**

A portable apparatus comprises a housing, and the housing includes an accommodation member and a lid. A coupling member is provided with a main body and two protruding portions formed on a side surface of the main body, and is rotatably secured to the housing within a plane parallel to a rear surface of the housing (lid). Moreover, a ring-like member is formed of material capable of deforming more easily elastically than the housing and the coupling member, and has a shape that a part of a ring-like frame is cut out. Engaging portions are provided in end portions of the ring-like member, and the engaging portions are engaged with the protruding portions of the coupling member. Therefore, the ring-like member is joined to the coupling member rotatably in a direction that the ring-like member is tilted (opened) to the rear surface of the housing. A user holds or wears the portable apparatus by passing a finger through the ring-like member to use it.

## Description

### BACKGROUND OF THE INVENTION

### Field of the invention

The present invention relates to a user assistance device and a portable apparatus with the same, and more specifically, a user assistance device for a portable apparatus that is held by or worn on a hand of a user, and a portable apparatus with the same.

### Description of the related art

An example of a related art is disclosed in Japanese patent application laying-open No. 2017-54686 [H01M 2/10, H05K 5/02, H05K 5/03, H05K 5/06] (Document 1) laid-open on March 16, 2017. The battery lid of this document 1 closes the battery accommodation portion provided on the communication device main body in order to attach or detach the battery, and includes the band passing portion capable of penetrating the band member and the engaging portion that detachably engages with the communication device main body. Moreover, the battery lid of other structural examples closes the battery accommodation portion provided on the communication device main body in order to attach or detach the battery, and comprises the clip portion, the engaging portion and the fixing mechanism. The engaging portion detachably engages with the communication device main body. The fixed mechanism includes a part of one side screw clamp mechanism and another side locking portion or a part of another side screw clamp mechanism.

In the communication device with the battery lid of the document 1, the communication device is attached to the user body by holding the band member attached to the battery lid or by using the band member, or the communication device is attached to the clothes of the user by using the clip portion of the battery lid; however, there is room for providing more diverse structure as a device for assisting the user when the user holds or wears a portable apparatus such as a communication device.

### SUMMARY

It is a primary object of the present invention to provide a novel user assistance device and a portable apparatus with the same.

Moreover, it is another object of the present invention to provide a user assistance device and a portable apparatus with the same, capable of providing more various assistance for a user.

A first invention is a user assistance device provided on a portable apparatus, comprising: a rotatable portion; a first protruding portion and a second protruding portion; and a frame portion. The rotatable portion is configured to be rotated around a first axis with respect to a housing of the portable apparatus. The first protruding portion and the second protruding portion are configured to protrude from a predetermined side surface of the rotatable portion in a direction intersecting the first axis. For example, the first protruding portion and the second protruding portion are extended on the same axis in mutually different directions at both sides of a main body of the rotatable portion. The frame portion is configured to have a first engaging portion with which the first protruding portion is engaged and a second engaging portion with which the second protruding portion is engaged, and to be formed with a through hole through which a finger of a user who holds and/or uses the portable apparatus can pass. The frame portion is configured to be rotatable around a second axis with respect to the rotatable portion in a state where the first engaging portion is engaged with the first protruding portion and the second engaging portion is engaged with the second protruding portion. That is, the frame portion can be opened (tilted) with respect to a housing.

According to the first invention, since the frame portion that is formed with the through hole through which the finger of the user can pass is provided so that it can be made to be rotated and/or tilted freely with respect to the housing of the portable apparatus, it is possible to provide to the user various user assistance.

A second invention is the user assistance device according to the first invention, wherein at least the first engaging portion and the second engaging portion of the frame portion are formed of elastic material.

According to the second invention, since the first engaging portion and the second engaging portion are deformable elastically, it is possible for the user to attach the frame portion to the rotatable portion or to remove the frame portion from the rotatable portion. Therefore, for example, even if the frame portion comes off, the user can attach the frame portion to the rotatable portion.

A third invention is the user assistance device according to the first or second invention, wherein each of the first engaging portion and the second engaging portion has a through hole shape or hole shape. Material forming at least peripheral portions of the first engaging portion and the second engaging portion is elastically deformed more easily than material constituting the first protruding portion and the second protruding portion.

According to the third invention, since at least the peripheral portions of the first engaging portion and the second engaging portion deforms elastically more easily than the first protruding portion and the second protruding portion, it is possible to attach the frame portion to the rotatable portion or to remove the frame portion from the rotatable portion.

A fourth invention is the user assistance device according to any one of the first to third inventions, wherein the first protruding portion is configured to have the first engaging portion and a first disengagement prevention portion (164) for preventing the first protruding portion from coming off the first engaging portion, and the second protruding portion is configured to have the second engaging portion and a second disengagement prevention portion (164) for preventing the second protruding portion from coming off the second engaging portion.

According to the fourth invention, it is possible to make the frame portion hard to be disengaged from the rotatable portion.

A fifth invention is the user assistance device according to the fourth invention, wherein the first disengagement prevention portion (164) is configured to have a diameter larger than a diameter of other part of the first protruding portion, and the second disengagement prevention portion (164) is configured to have a diameter larger than a diameter of other part of the second protruding portion.

According to the fifth invention, it is also possible to make the frame portion hard to be disengaged from the rotatable portion.

A sixth invention is the user assistance device according to the fourth or fifth invention, wherein the first disengagement prevention portion (164) is provided near a tip end of the first protruding portion, and the second disengagement prevention portion (164) is provided near a tip end of the second protruding portion.

A seventh invention is the user assistance device according to any one of the first to sixth inventions, wherein the frame portion is cut out at least a part of the frame portion. Each of the first engaging portion and the second engaging portion is provided in the cut-out portion. The first engaging portion is provided in a first end portion, and the second engaging portion is provided in a second end portion (18c).

An eighth invention is the user assistance device according to the seventh invention, wherein the frame portion is configured to have a third portion near the first end portion and a fourth portion near the second end portion (18c), the third portion and the fourth portion being made to be thicker than other portions except the third portion and the fourth portion of the frame portion, respectively.

According to the eighth invention, strength in each of the first end portion and the second end portion (18c) can be reinforced.

A ninth invention is the user assistance device according to any one of the first to eighth inventions, wherein each of the first engaging portion and the second engaging portion is configured to be formed with a through hole or hole, and an inner peripheral portion defining the through hole or hole is formed of elastic material. The first engaging portion is passed the through hole or fit into the hole, thereby to be joined to (engaged with) the first protruding portion. Similarly, the second engaging portion is joined to (engaged with) the second projecting portion.

According to the ninth invention, the frame portion can be attached to the rotatable portion, or the frame portion can be removed from the rotatable portion.

A tenth invention is the user assistance device according to the ninth invention, wherein a diameter of the through hole or hole of the first engaging portion is smaller than a diameter of the first protruding portion in a state where the first engaging portion is not engaged with the first protruding portion, and a diameter of the through hole or hole of the second engaging portion is smaller than a diameter of the second protruding portion in a state where the second engaging portion is not engaged with the second protruding portion.

According to the tenth invention, since the protruding portion is pressed into the through hole or hole of the engaging portion, if the frame portion is joined to the rotatable portion, the frame portion is hard to come off the rotatable portion.
An eleventh invention is the user assistance device according to the ninth or tenth invention, wherein at least a slit is formed in each of a periphery defining the through hole or hole of the first engaging portion and a periphery defining the through hole or hole of the second engaging portion.

According to the eleventh invention, since the slit is formed, it is possible to make the first engaging portion and the second engaging portion to elastically deform more easily.

A twelfth invention is the user assistance device according to any one of the first to eleventh inventions, wherein the housing is configured to have a first surface and a second surface perpendicular or substantially perpendicular to the first surface. The rotatable portion is provided near the second surface of the housing within the first surface of the housing.

According to the twelfth invention, since the rotatable portion is provided near the second surface perpendicular to the first surface of the housing within the first surface, even if a force is applied to the rotatable portion from an external, it is possible to prevent the housing from being deformed as much as possible.

A thirteenth invention is the user assistance device according to any one of the first to twelfth inventions, wherein each of the first protruding portion and the second protruding portion is formed in a columnar or substantially columnar shape at least a part of each of the first protruding portion and the second protruding portion.

According to the thirteenth invention, since at least a part of the protruding portion is formed in a columnar or substantially columnar shape, it is possible to tilt the frame portion with respect to the housing.

A fourteenth invention is the user assistance device according to any one of the first to thirteenth inventions, wherein at least a part brought into contact to the housing of the frame portion is formed of elastic material.

According to the fourteenth invention, since the portion that contacts the housing at least is formed of the elastic material, it is possible to prevent the housing from being damaged by the frame portion coming into contact with the housing.

A fifteenth invention is the user assistance device according to any one of the first to fourteenth inventions, wherein the first axis and the second axis are orthogonal or substantially orthogonal.

A sixteenth invention is the user assistance device according to any one of the first to fifteenth inventions, wherein the housing includes an accommodation portion configured to accommodate at least a battery of the portable apparatus and a lid attached to the accommodation portion, and the rotatable portion is provided on the lid.

A seventeenth invention is a portable apparatus having the user assistance device according to any one of the first to sixteenth inventions.

The above described objects and other objects, features, aspects and advantages of the inventions will become more apparent from the following detailed description when taken in conjunction with the accompanying drawings.

### BRIEF DESCRIPTION OF THE DRAWINGS

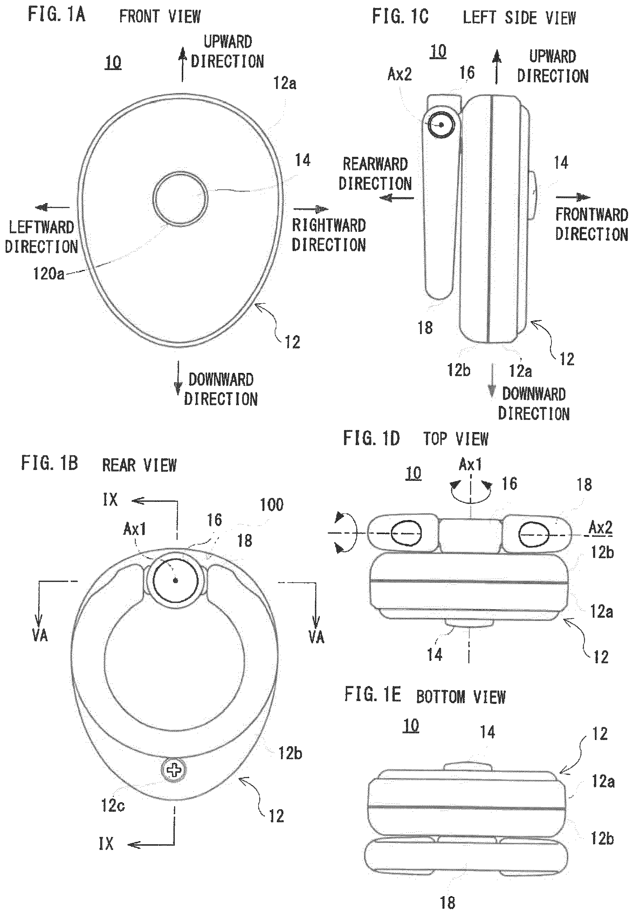

Figure 1A is a front view showing a non-limiting example portable apparatus, Figure 1B is a rear view of the portable apparatus, Figure 1C is a left side view of the portable apparatus, Figure 1D is a top view of the portable apparatus, and Figure 1E is a bottom view of the portable apparatus.

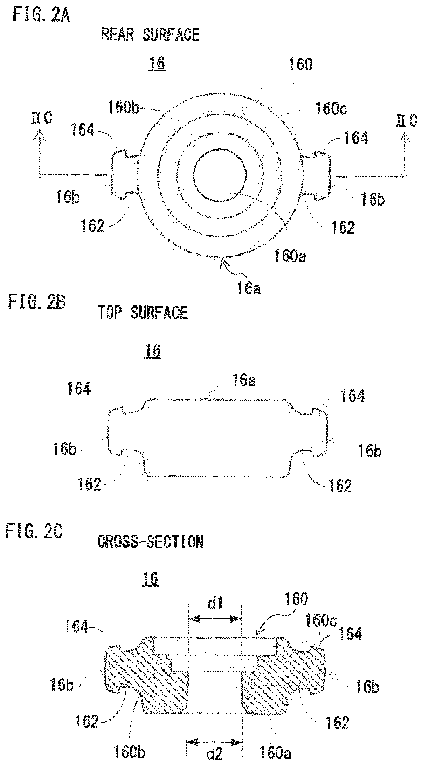

Figure 2A is an illustration view showing a non-limiting example coupling member shown in Figure 1A-Figure 1D, when viewed from the rear, Figure 2B is an illustration view showing a non-limiting example coupling member shown in Figure 1A-Figure 1E, when viewed from the above, and Figure 2C is a sectional view showing a non-limiting example cross-section at a line IIC-IIC in Figure 2A.

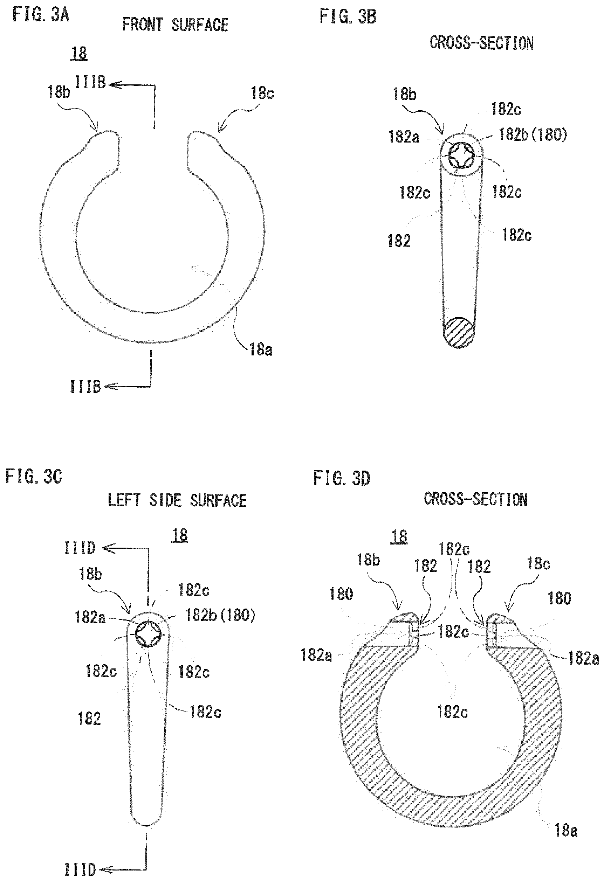

Figure 3A is a front view showing a non-limiting example ring-like member shown in Figure 1B-Figure 1E, Figure 3B is a sectional view showing a non-limiting example cross-section at a line IIIB-IIIB in Figure 3A, Figure 3C is a left side view of the ring-like member shown in Figure 1B-Figure 1E, and Figure 3D is a sectional view showing a non-limiting example cross-section at a line IIIC-IIIC in Figure 3C.

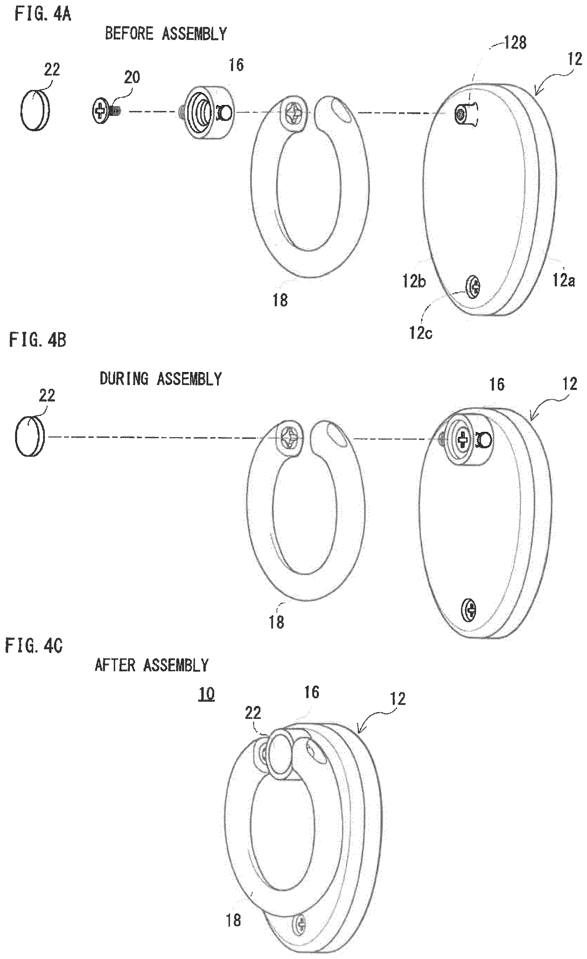

Figure 4A is a perspective view showing a non-limiting example state where the portable apparatus of this embodiment is disassembled, Figure 4B is a perspective view showing a non-limiting example state during assembly of the portable apparatus, and Figure 4C is a perspective view showing a non-limiting example state after assembly of the portable apparatus.

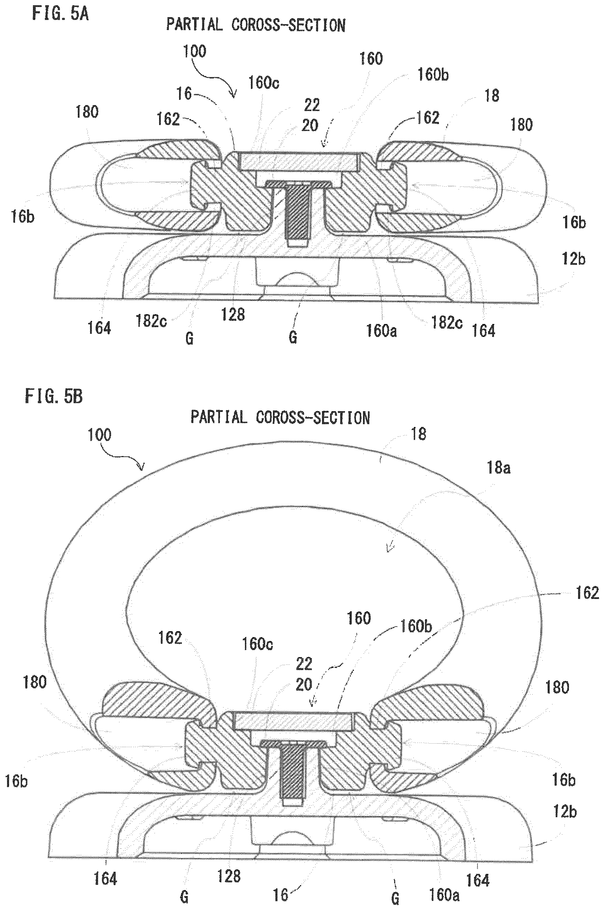

Figure 5A is a sectional view showing a part of a non-limiting example cross-section at a line VA-VA in Figure 1B, and Figure 5B is a sectional view showing a non-limiting example state where the ring-like member is opened from a state shown in Figure 5A.

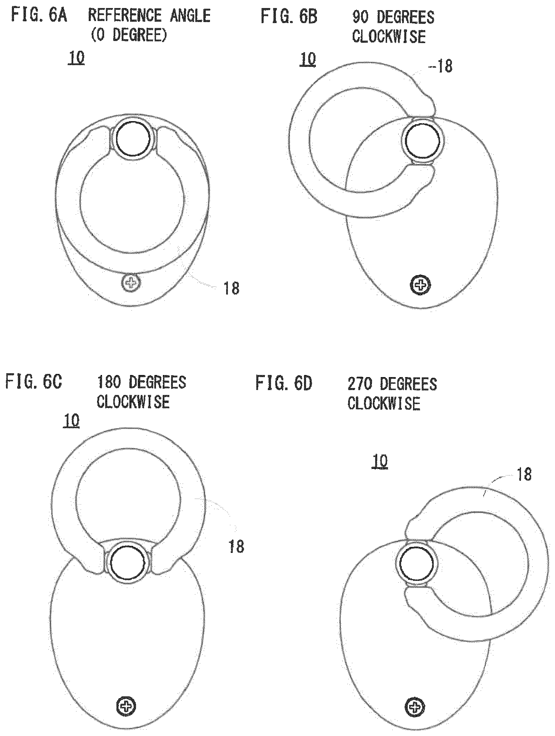

Figure 6A is an illustration view showing the portable apparatus in a case where the ring-like member is located at a reference angle, when viewed from the rear, Figure 6B is an illustration view showing the portable apparatus in a case where the ring-like member is rotated 90 degrees clockwise from a state shown in Figure 6A, when viewed from the rear, Figure 6C is an illustration view showing the portable apparatus in a case where the ring-like member is rotated 180 degrees clockwise from a state shown in Figure 6A, when viewed from the rear, and Figure 6D is an illustration view showing the portable apparatus in a case where the ring-like member is rotated 270 degrees clockwise from a state shown in Figure 6A, when viewed from the rear.

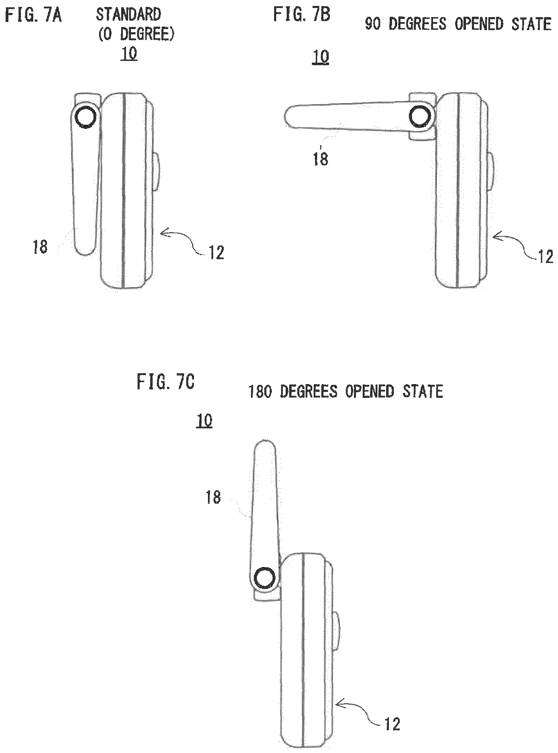

Figure 7A is an illustration view showing the portable apparatus in a case where the ring-like member 18 is located at the reference angle, when viewed from the left side, Figure 7B is an illustration view showing the portable apparatus in a case where the ring-like member is rotated 90 degrees from a state shown in Figure 7A to the rear side, when viewed from the left side, and Figure 7C is an illustration view showing the portable apparatus in a case where the ring-like member is rotated 180 degrees from a state shown in Figure 7A to the rear side, when viewed from the left side.

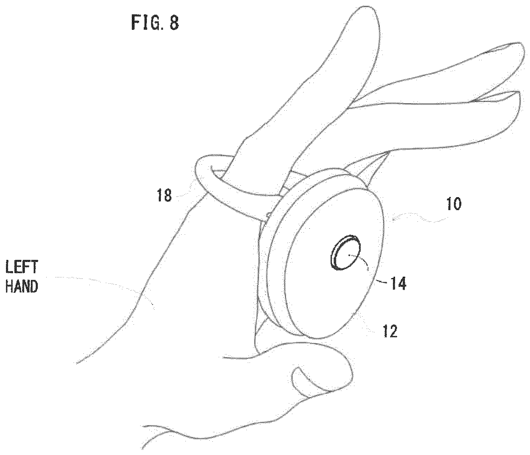

Figure 8 is an illustration view showing a non-limiting example state where the portable apparatus is held by or worn on a hand of the user.

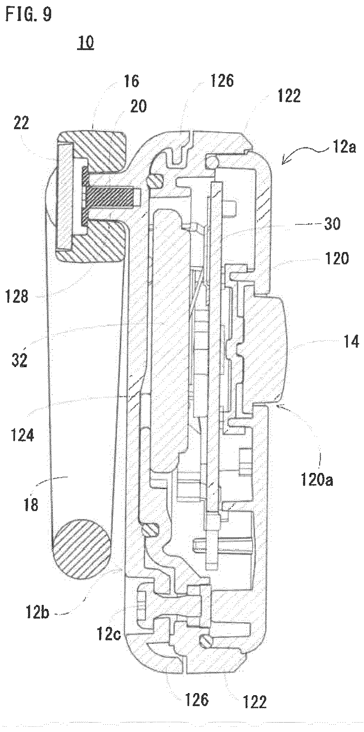

Figure 9 is a sectional view showing a non-limiting example cross-section at a line IX-IX in Figure 1B.

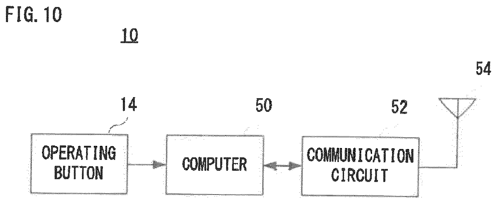

Figure 10 is a block diagram showing non-limiting example electric structure of the portable apparatus of this embodiment.

### DETAILED DESCRIPTION OF NON-LIMITING EXAMPLE EMBODIMENTS

Figure 1A-Figure 1E are schematic views showing a non-limiting example appearance configuration of a non-limiting example portable apparatus 10. Figure 1A is a front view of the portable apparatus 10, Figure 1B is a rear view of the portable apparatus 10, Figure 1C is a left side view of the portable apparatus 10, Figure 1D is a top view of the portable apparatus 10, and Figure 1E is a bottom view of the portable apparatus 10. Although the right side view of the portable apparatus 10 is omitted, it is symmetrical to the left side view.

Hereinafter, in a case of describing using a direction, directions (upward direction, downward direction, leftward direction, rightward direction, frontward direction and rearward direction) shown in Figure 1A and Figure 1C are used, unless otherwise specified. However, in the portable apparatus 10, a surface provided with an operating button 14 is rendered as a front surface, a surface provided with a ring-like member 18 is rendered as a rear surface, and as to the portable apparatus 10, a side provided with a portion that the ring-like member 18 is coupled to a housing 12 is rendered as an upper side and a side opposite to the side is rendered as a lower side. In addition, when the upper side, the lower side, the front side and the rear side are determined on the portable apparatus 10, the left side and the right side of the portable apparatus 10 are also determined.

With reference to Figure 1A-Figure 1E, the portable apparatus 10 of this embodiment includes the housing 12, and the operating button 14 is provided slightly above the center of the front side of the housing 12. Moreover, a coupling member 16 is provided in an upper side on the rear surface of the housing 12, and the ring-like member 18 is provided on the housing 12 using this coupling member 16. An assistance device (user assistance device) 100 that is used by a user when holding or wearing the portable apparatus 10 is constituted by the coupling member 16 and the ring-like member 18.

The housing 12 is constituted by an accommodation member 12a and a lid 12b provided attachably and detachably to or from this accommodation member 12a, as shown in Figure 1A-Figure 1E. The housing 12 is formed of a resin such as nylon ABS (acrylonitrile-butadiene-styrene copolymer), and has a predetermined thickness, and has a predetermined shape such as an egg shape or an elliptical shape when viewing the housing 12 (portable apparatus 10) from the front or rear.

The accommodation member 12a is formed in a shape of box that the rear side is opened, and accommodates electric structure (see Figure 10) mentioned later. The accommodation member 12a is constituted by a plate member 120 and a wall members 122 extended toward the rear side in an edge of the plate member 120 (see Figure 9). That is, the accommodation member 12a has a surface corresponding to the front surface of the housing 12 and a surface perpendicular or substantially perpendicular to this surface corresponding to the front surface. A through hole 120a is formed in the substantially center of the plate member 120, and the operating button 14 is provided in the housing 12 (accommodation member 12a) so that an operating portion of this operating button 14 is protruded toward the front side through the through hole 120a.

The lid 12b is formed in a shape of box that the front side is opened, and constituted by a plate member 124 and a wall member 126 extended toward the front side in an edge of this plate member 124 (see Figure 9). That is, the lid 12b is has a surface corresponding to the rear surface of the housing 12 and a surface perpendicular or substantially perpendicular to this surface corresponding to the rear surface. The lid 12b is fixed to the accommodation member 12a using a screw 12c. However, an upper side of the lid 12b not fixed by the screw 12c is locked to the accommodation member 12a. Although mentioned in detail later, the coupling member 16 is attached to the housing 12 (lid 12b), and the ring-like member 18 is attached to the coupling member 16. That is, the ring-like member 18 is coupled to the housing 12 by the coupling member 16. Moreover, a cylindrical member 128 is formed in an upper side of the rear surface of the lid 12b, which is extended perpendicular or substantially perpendicular to the rear surface of the lid 12b, and formed with a screw hole (see Figure 4).

Figure 2A is a rear view showing a non-limiting example coupling member 16 shown in Figure 1A-Figure 1D, when viewed from the rear, Figure 2B is a top view showing a non-limiting example coupling member 16 shown in Figure 1A-Figure 1E, when viewed from the above, and Figure 2C is a sectional view showing a non-limiting example cross-section at a line IIC-IIC in Figure 2A.

As shown in Figure 2A-Figure 2C, similar to the housing 12, the coupling member 16 is formed of a resin such as nylon ABS, and constituted by a main body 16a in a disk shape or cylindrical shape (substantially cylindrical shape) and two protruding portions 16b protruding from a side surface of the main body 16a outward.

Moreover, the main body 16a is formed with a through hole 160 that penetrates this main body 16 in a thickness direction (a height direction of the cylindrical shape), and as mentioned in detail later, the coupling member 16 is secured to the housing 12 (lid 12b) at least rotatably with using the screw 20. However, as shown in Figure 1B and Figure 1D, the coupling member 16 is rotatable around an axis (rotation axis) Ax1 that is extended in the thickness (height) direction while passing the center of a circle of the cylindrical shape when viewed from the rear.

The through hole 160 has a portion 160a for being inserted with the coupling member 16 into the cylindrical member 128 provided on the lid 12b, a portion 160b for fixing the cylindrical member 128 with the screw 20, and a portion 160c for sticking a seal member (decorative plate) 22, diameters of which being different from each other. In this embodiment, the diameter of the portion 160a is the smallest, the diameter of the portion 160c is the largest, and the diameter of the portion 160b is a size between the diameter of the portion 160a and the diameter of the portion 160c. Therefore, as well seen from the sectional view of Figure 2C, the coupling member 16 is formed with a step inside the main body 16a. Moreover, as shown in Figure 2C, the diameter of the portion 160a of the through hole 160 is gradually increased toward the rear side from the front side while being little by little, and a diameter d2 in an end portion of the front side is made larger than a diameter d1 in an end portion of the rear side (see Figure 5A, 5B). Therefore, as mentioned later, the coupling member 16 is supported by the cylindrical member 128 of the lid 12b in the end portion of the rear side in the portion 160a of the through hole 160.

Moreover, the two protruding portions 16b protrude, on the side surface of the main body 16a, in a direction intersecting the rotation axis Ax1 shown in Figure 1B and Figure 1D. In this embodiment, the two protruding portions 16b protrude in a direction orthogonally intersecting the rotation axis Ax1. However, one protruding portion 16b and the other protruding portion 16b are in a straight line and protrude in mutually opposite directions. Therefore, as mentioned later, the ring-like member 18 coupled with the coupling member 16 (protruding portions 16b) is configured to be rotated around a rotation axis Ax2. Moreover, each of the two protruding portions 16b is formed in a rod shape with a cross section of a circular shape, and has an disengagement prevention portion 164 that a position near a tip end (or end portion) from the side surface of the main body 16a has diameter larger than that of another part (hereinafter, referred to as "extension portion 162").

Although the rotation axis Ax1 and the rotation axis Ax2 intersect at the right angle as shown in Figure 1B-Figure 1D and are provided in the same plane in this embodiment, it does not need to be limited to this. It is sufficient that the rotation axis Ax1 and the rotation axis Ax2 intersect when viewed in a three-dimensionally. Therefore, in other embodiments, the coupling member 16 may be formed so that the rotation axis Ax2 intersects an axis (direction) parallel to the rotation axis Ax1 at the right angle in the same plane.

Each of the extension portions 162 is formed in a columnar shape or a substantially columnar shape. Moreover, a diameter of the disengagement prevention portion 164 is made smaller toward a tip end from a side of the main body 16a. That is, the disengagement prevention portion 164 is formed in a substantially truncated cone shape. This is to facilitate attachment of the ring-like member 18. Conversely, the diameter of the disengagement prevention portion 164 is made to be increased from the tip end toward the main body 16a. This is to make it difficult for the ring-like member 18 to be detached.

In addition, the extension portion 162 does not need to be formed in a columnar shape or a substantially columnar shape, and a cross-section may be formed a polygonal columnar shape or a polygonal rod shape.

Moreover, the disengagement prevention portion 164 does not need to be formed in a substantially truncated cone shape, and may be formed in a spherical shape or a substantially spherical shape as long as the diameter is larger than the extension portion 162.

Figure 3A is a front view showing a non-limiting example ring-like member 18, when viewed from the front, Figure 3B is a sectional view showing a non-limiting example cross-section at a line IIIB-IIIB in Figure 3A, Figure 3C is a left side view of the ring-like member 18, when viewed from the left, and Figure 3D is a sectional view showing a non-limiting example cross-section at a line IIIC-IIIC in Figure 3C.

The ring-like member (frame portion) 18 is formed of a resin such as polyester elastomer. That is, in this embodiment, the ring-like member 18 is formed of material softer than the housing 12 and the coupling member 16. Therefore, the ring-like member 18 elastically deforms more easily than the housing 12 and the coupling member 16.

As understood with reference to Figure 3A and Figure 3D, the ring-like member 18 has a shape that a part of a ring-like frame body that forms a through hole or opening 18a is cut out. Moreover, the ring-like member 18 is a shape that a round bar is formed in a ring shape, and has a portion that is made to be gradually thinner as being separated from a portion near one end portion 18b forming the cut out portion, and a portion that is made to be gradually thinner as being separated from a portion near the other end portion 18c forming the cut out portion. Moreover, curved surfaces are formed in the end portion 18b and the end portion 18c so as not to form corner portions. Therefore, in the ring-like member 18, the thickest portion is a portion moved from the end portion 18b and the end portion 18c toward the center of the ring-like member 18 by the curved surfaces, respectively. That is, in the ring-like member 18, portions near the end portion 18b and a portion near the end portion 18c are made thicker than other portions except those portions.

However, as long as the portion near the end portion 18b and the portion near the end portion 18c are thicker than the other portions except those portions, the other portions may be uniform thickness.

Moreover, when not forming in the end portion 18b and the end portion 18c the curved surfaces for eliminating corner portions, the end portion 18b and the end portion 18c are made thicker than other portions except those portions. Therefore, in this embodiment, the end portion 18b is included in the portion near the end portion 18b, and similarly, in the portion near the end portion 18c, the end portion 18c is included.

Moreover, the ring-like member 18 is joined (attached) to the coupling member 16 in the cut-out portion. Specifically, the ring-like member 18 is formed with through holes 180 and engaging portions 182 in one end portion 18b and the other end portion 18c, respectively. In this embodiment, each of the through holes 180 is formed so as to be extended in a shape of a straight line in a horizontal direction from each of end surfaces (tip ends (end surfaces) of one end portion 18b and the other end portion 18c) of the ring-like member 18 to an outer peripheral surface of the ring-like member 18. Moreover, each of the engaging portions 182 is provided inside the through hole 180, in each of the tip ends (end surfaces) of one end portion 18b and the other end portion 18c or near. The engaging portion 182 is provided by forming a through hole 182b and a plurality of slits 182c in a circular plate-like member 182a that has a predetermined thickness.

However, the plate-like member 182a is provided so that a circular surface thereof becomes to be in parallel or substantially parallel to a circular cross-section of the through hole 180. Moreover, in this embodiment, a diameter of the through hole 182b is set to be smaller than a diameter of the extension portion 162. However, a difference of the diameter of the through hole 182b and the diameter of the extension portion 162 is very small. Therefore, by using the elasticity (elastic force) of the ring-like member 18 formed of an elastic member, the through hole 182b and the extension portion 162 can be brought into closely contact with each other and caulked.

In addition, although the sizes of the diameter of the through hole 182b and the diameter of the extension portion 162 are mentioned since providing with the extension portion 162 in a columnar shape and the through hole 182b in a circular shape in this embodiment, it does not need to be limited to this. When the extension portion 162 is not in a columnar shape and the through hole 182b is not in a circular shape, the through hole 182b is elastically deformed, so that a size (area) of the through hole 182b may be set to be smaller than a thickness (cross sectional area) of the extension portion 162.

Thus, since the through holes 180 are formed in the end portion 18b and the end portion 18c, by making the end portion 18b and the end portion 18c thicker than the other portions as mentioned above, the strength at the end portion 18b and the end portion 18c is strengthened (secured).

Moreover, the plurality of slits 182c are formed around (in a periphery of) the through hole 182b. In this embodiment, four (4) slits 182c are formed in an upper side, a lower side, a front side and a rear side. That is, the four slits 182c are formed every 90 degrees in a direction of a circumference of the through hole 182b. However, the slit 182c may not be formed, and the number of slits 182c may be three or less.

The engaging portion 182 provided in one end portion 18b is engaged to one protruding portion 16b, and the engaging portion 182 provided in the other end portion 18c is engaged to the other protruding portion 16b. However, since the ring-like member 18 is bilaterally symmetrical when viewed from the front, and the front and back surfaces are also symmetrical, and the above-mentioned coupling member 16 is attached rotatably (turnably) around the rotation axis Axl, the engaging portion 182 provided in one end portion 18b may be engaged to the other protruding portion 16b, and the engaging portion 182 provided in the other end portion 18c may be engaged to one protruding portion 16b.

Figure 4A is a perspective view showing a non-limiting example state where the portable apparatus 10 is disassembled, Figure 4B is a perspective view showing a non-limiting example state during assembly of the portable apparatus 10, and Figure 4C is a perspective view showing a non-limiting example state after assembly of the portable apparatus 10. Moreover, Figure 5A is a sectional view showing a non-limiting example cross-section at a line VA-VA in Figure 1B, and Figure 5B is a sectional view showing a non-limiting example state where the ring-like member 18 is opened to the rear side from a state shown in Figure 5A.

As shown in Figure 4A, Figure 4B, Figure 5A and Figure 5B, in this embodiment, the coupling member 16 is fixed to the housing 12 (lid 12b) with the screw 20. Since a screw head of the screw 20 is engaged with a step portion that is formed by the difference between the diameters of the portion 160a and the portion 160b of the through hole 160 formed in the coupling member 16, as shown in Figure 5A and Figure 5B, the coupling member 16 is prevented from being detached from the housing 12.

If the coupling member 16 is fixed to the housing 12 with the screw 20, a seal member 22 is provided in the portion 160c of the through hole 160 formed in the coupling member 16 so as to make the head of the screw 20 be hidden. However, the seal member 22 is stuck on the step portion formed by the difference of the diameters of the portion 160b the portion 160c of the through hole 160. Moreover, the seal member 22 also has a waterproof function, so that rusting of the screw 20 can be prevented to a certain extent.

Subsequently, the ring-like member 18 is joined to the coupling member 16. That is, as well seen in Figure 5A and Figure 5B, at both ends of the ring-like member 18, the engaging portions 182 are engaged with the protruding portions 16b (disengagement prevention portion 164) of the coupling member 16. When the ring-like member 18 is joined to the coupling member 16, the through hole 182b is moved to the extension portion 162 while exceeding the disengagement prevention portion 164. When the engaging portion 182 exceeds the disengagement prevention portion 164, the plate-like member 182a that is an inner peripheral portion of the through hole 182b is elastically deformed, and the through hole 182b is enlarged. In this embodiment, since the four slits 182c are formed in the periphery of the through hole 182b as mentioned above, the plate-like member 182a easily deforms elastically. Thus, as shown in Figure 4C, the portable apparatus 10 is assembled.

However, before attaching the coupling member 16 to the housing 12, the ring-like member 18 may be joined to the coupling member 16. Moreover, after attaching the coupling member 16 and the ring-like member 18, the seal member 22 may be provided on the coupling member 16.

Moreover, as mentioned above, since the diameter of the through hole 182b is smaller than the diameter of the extension portion 162 and the disengagement prevention portion 164 in the ring-like member 18, each of the two protruding portions 16b is pressed fit into corresponding one of the engaging portions 182. Moreover, as mentioned above, since the through hole 182b and the extension portion 162 can be brought into closely contact with each other and caulked, if the ring-like member 18 is rotated around the rotation axis Ax2 as shown in Figure 5B, the ring-like member 18 stops at the rotated position (arbitrary position or angle). That is, the ring-like member 18 maintains a state where it is opened with respect to the housing 12. That is, the tilt or attitude of the ring-like member 18 against the housing 12 is held.

Furthermore, the diameter d1 of the end portion in the rear side of the portion 160a of the through hole 160 formed in the coupling member 16 is the same or substantially the same as the diameter of the cylindrical member 128, and as explained using Figure 2, it is slightly smaller than the diameter d2 of the end portion in the front side of the portion 160a. Furthermore, a length of the portion 160a of the through hole 160 is shorter than a length (height) of the cylindrical member 128. Therefore, if the coupling member 16 is attached to the housing 12, at least, the end portion in the rear side of the portion 160a of the through hole 160 is brought into contact to the end portion in the rear side of the cylindrical member 128, and the coupling member 16 can be supported by the cylindrical member 128. Therefore, as shown in Figure 5A and Figure 5B, a gap G is formed between the front of the coupling member 16 and the rear of the housing 12. Accordingly, the coupling member 16 is rotatable around the cylindrical member 128 (rotation axis Ax1).

In addition, although the slit 182c appears in a sectional view in a state shown in Figure 5A since the four slits 182c are formed in the circumstance direction of the through hole 182b every 90 degrees as mentioned above, in a state shown in Figure 5B that the ring-like member 18 is tilted toward the rear side about 45 degrees from the state shown in Figure 5A, the slit 182c does not appear in the sectional view.

Figure 6A is an illustration view showing the portable apparatus 10 in a case where the ring-like member 18 is located at a reference angle (0 degree), when viewed from the rear, Figure 6B is an illustration view showing the portable apparatus 10 in a case where the ring-like member 18 is rotated 90 degrees clockwise from a state shown in Figure 6A, when viewed from the rear, Figure 6C is an illustration view showing the portable apparatus 10 in a case where the ring-like member 18 is rotated 180 degrees clockwise from a state shown in Figure 6A, when viewed from the rear, and Figure 6D is an illustration view showing the portable apparatus 10 in a case where the ring-like member 18 is rotated 270 degrees clockwise from a state shown in Figure 6A, when viewed from the rear.

Moreover, Figure 7A is an illustration view showing the portable apparatus 10 in a case where the ring-like member 18 is located at the reference angle, when viewed from the left side, Figure 7B is an illustration view showing the portable apparatus 10 in a case where the ring-like member 18 is rotated (opened) 90 degrees from a state shown in Figure 7A, when viewed from the left side, and Figure 7C is an illustration view showing the portable apparatus in a case where the ring-like member is rotated (opened) 180 degrees from a state shown in Figure 7A, when viewed from the left side.

In addition, in Figure 6A-Figure 6D and Figure 7A-Figure 7C, a state where the ring-like member 18 is located so that the protruding portions 16b of the coupling member 16 and the through hole 180 of the ring-like member 18 are extended straight right and left (just horizontally) in a case where the portable apparatus 10 is when viewed from the rear side, and that the ring-like member 18 is located so that the ring-like member 18 extended straight up and down (just vertically) in a case where the portable apparatus 10 is viewed from a side surface is rendered as the reference state, and a rotation (turn) angle of the coupling member 16 at that time is 0 (zero) degree, and an angle (tilt angle) that the ring-like member 18 is opened is 0 (zero) degree.

The coupling member 16 is rotatably secured to the housing 12 and is rotated around the rotation axis Ax1. Therefore, the ring-like member 18 can be positioned at an arbitrary angle in a clockwise direction (counterclockwise direction) within a plane parallel to the rear surface (front surface) of the housing 12. The examples of Figure 6A-Figure 6D, the ring-like member 18 is set at representative angles (0 degree, 90 degrees, 180 degrees and 270 degrees) with respect to the housing 12 within the plane parallel to the rear surface of the housing 12.

Moreover, the ring-like member 18 is rotatably secured to the coupling member 16, and rotated around the rotation axis Ax2. Therefore, as shown in Figure 7A-Figure 7B, the ring-like member 18 can be positioned at an angle of up to 180 degrees to be opened with respect to the rear surface of the housing 12.

Since the front side and the rear side of the ring-like member 18 are symmetrical as mentioned above, as shown in Figure 7C, a state where the ring-like member 18 is opened 180 degrees with respect to the housing 12 has appearance the same as the state shown in Figure 6C. Moreover, for example, a state that the ring-like member 18 is rotated 90 degrees clockwise from the state where the ring-like member 18 is opened 180 degrees with respect to the housing 12 as shown in Figure 7C has appearance the same as the state shown in Figure 6D.

However, it is possible to perform simultaneously rotating the ring-like member 18 around the rotation axis Ax1 and rotating the ring-like member 18 around the rotation axis Ax2.

In addition, although it is mentioned that the ring-like member 18 is rotatable around the rotation axis Ax2 up to a state where the ring-like member 18 is opened 180 degrees with respect to the rear surface of the housing 12, in fact, since the housing 12 (lid 12) has rounded corner, the ring-like member 18 can be opened up to an angle over 180 degrees so as to follow an inclination of the rounded corners.

Thus, the ring-like member 18 can be rotated (turned) in two axial directions with respect to the housing 12 by using the coupling member 16, and therefore, the ring-like member 18 can be freely rotated or tilted (opened) with respect to the housing 12. As shown in Figure 8, the portable apparatus 10 of this embodiment is used by holding or worn the same by passing the finger of the user through the through hole 18a of the ring-like member 18. In the example shown in Figure 8, the user holds or wears the portable apparatus 10 in a manner that the housing 12 and the coupling member 16 is located in a palm side by passing the index finger of the left hand through the through hole 18a of the ring-like member 18. The user depresses the operating button 14 of the portable apparatus 10 with the right hand if needed. However, the example shown in Figure 8 is an example of a case where the portable apparatus 10 is held or worn, and should not be limited, and it is possible to set for each user a direction of the through hole 18a of the ring-like member 18 for making it easy to hold (wear) or use the portable apparatus 10. For example, the portable apparatus 10 may be held by or worn on the right hand, and another finger may be inserted into the through hole 18a of the ring-like member 18. Therefore, it is possible to provide various user assistance.

Figure 9 is a sectional view showing a non-limiting example cross-section at a line IX-IX in Figure 1B. As shown in Figure 9, an electronic board 30 and a battery 32 are provided inside the housing 12, and although omitting detailed description, various kinds of circuit components are mounted on the electronic board 30 to be connected to each other. Moreover, a voltage from the battery 32 is applied to the various kinds of circuit components. Therefore, the battery 32 is exchangeable by removing the above-mentioned lid 12b.

Moreover, as shown also in Figure 9, the coupling member 16 is inserted into the cylindrical member 128 provided in the housing 12 (lid 12b), and is fixed with the screw 20 from the rear side. In the portable apparatus 10 of this embodiment, the cylindrical member 128 is arranged near an edge of the plate member 124 in the rear side of the housing 12 (lid 12b). This is for making it difficult for the cylindrical member 128 to be pushed into the housing 12 even if the portable apparatus 10 is stepped on or a heavy object is placed on the portable apparatus 10. Moreover, even if the cylindrical member 128 is pushed into the housing 12, only an outside of a portion (range) provided with the battery 32 is deformed, and therefore, it is possible to prevent inconveniences such as short-circuiting of the electrodes due to deformation of the battery 32.

However, since the wall member 126 is provided in the edge portion of the housing 12 (lid 12b) in a direction perpendicular or substantially perpendicular to the plate member 124, strength against the direction that the cylindrical member 128 is pushed into the housing 12 is high.

Moreover, since the ring-like member 18 is formed of material being elastically deformable, when a force exceeding a predetermined value acts in a direction that the ring-like member 18 cannot be rotated or tilted with respect to the housing 12 (direction that the end portions 18b and 18c are pulled out from the protruding portions 16b), the ring-like member 18 is detached from the coupling member 16, and therefore, it is possible to prevent a force from being applied to the housing 12 and/or the coupling member 16 to be damaged. That is, it is possible to prevent the portable apparatus 10 and/or the ring-like member 18 from being damaged. However, the predetermined value is a minimum value of a magnitude of the force that a state of engagement of the engaging portion 182 with the disengagement prevention portion 164 is released in a predetermined direction.

Figure 10 is a block diagram showing non-limiting example electric structure of the portable apparatus 10. As shown in Figure 10, the portable apparatus 10 includes a computer or microcomputer 50, and the above-mentioned operating button 14 is connected to the computer 50, and a communication circuit 52 is connected to the computer 50. Moreover, an antenna 54 is connected to the communication circuit 52. Although omitted in Figure 10, a power source from the above-mentioned battery 32 is supplied to respective circuit components.

The communication circuit 52 is a wireless communication circuit according to a predetermined wireless communication standard (a Bluetooth (registered trademark) standard, a Wi-Fi (registered trademark) standard, etc.) capable of performing wireless communication with other information processing apparatuses. For example, the information processing apparatus may be a portable game apparatus, a stationary game apparatus, a smartphone, a mobile phone, a tablet terminal, a personal computer, or the like.

For example, the computer 50 converts a predetermined operation signal into transmission data in response to an operation of the operating button 14 to transmit to an information processing apparatus through the communication circuit 52 and the antenna 54. Moreover, transmission data from the information processing apparatus is received through the antenna 54 and the communication circuit 52, and the computer 50 performs predetermined processing according to the received transmission data. Although illustration is omitted, when the portable apparatus 10 is provided with a vibration motor or/and an LED lamp, according to the transmission data from the information processing apparatus, the computer 50 operates the vibration motor or/and the LED lamp. According to this, the user operates the operating button 14. However, when the portable apparatus 10 is provided with a speaker, the computer 50 may output a predetermined sound (notification sound) from the speaker according to the transmission data from the information processing apparatus. However, the notification sound may be output instead of operations the vibration motor and the LED lamp, or together with the operations the vibration motor and the LED lamp.

According to this embodiment, since the ring-like member that is freely rotatable and tiltable with respect to the housing is provided, various user assistance can be provided to the user who holds the portable apparatus by passing the finger through the ring-like member.

Moreover, according to this embodiment, since the ring-like member is elastically deformable, when a force exceeding the range where the ring-like member can be rotated or tilted is applied to the ring-like member, the ring-like member is detached from the coupling member, it is possible to prevent the portable apparatus from being damaged. Moreover, even if the ring-like member is detached, it is sufficient to push the end portions of the ring-like member toward the coupling member side so that the protruding portions of the coupling member are engaged with the engaging portions of the ring-like member, the user can attach the ring-like member easily.

Furthermore, according to this embodiment, since there is provided, near the edge of the rear surface of the housing, with the cylindrical member to which the coupling member is attached, to which the ring-like member is joined, it is possible to prevent the cylindrical member from being pushed into the housing. Moreover, since the cylindrical member is outside an area where the battery is arranged, even if the cylindrical member is pushed into the housing, it is possible to avoid inconveniences that the battery is deformed and the electrodes are short-circuited.

In addition, the protruding portions are provided on the coupling member and the engaging portions are provided on the ring-like member in this embodiment; however, it is possible to provide the engaging portions on the coupling member and the protruding portions on the ring-like member. In such a case, the coupling member is formed of a resin such as polyester elastomer, and the ring-like member is formed of a resin such nylon ABS.

Moreover, although the ring-like member is entirely formed of a resin such as polyester elastomer in this embodiment, at least the engaging portions should just be formed of a resin such as polyester elastomer. However, if a portion brought into contact to the housing is also formed of a resin such as polyester elastomer in addition to the engaging portions in the ring-like member, it is possible to prevent the housing from being damaged by the ring-like member coming into contact with the housing.

Furthermore, in this embodiment, although the coupling member is formed of a resin such as nylon ABS and the ring-like member is formed of a resin such as polyester elastomer; however, conversely, the coupling member may be formed of a resin such as polyester elastomer and the ring-like member may be formed of a resin such as nylon ABS. In this case, the coupling member (protruding portions) tends to deform elastically than the ring-like member (engaging portions).

Furthermore, in this embodiment, the through hole penetrating from the end surface to the outer peripheral surface of the ring-like member is provided in the end portion of the ring-like member, and the engaging portion is provided in the through hole; however, instead of the through hole, a hole that does not penetrate from the end surface of the ring-like member to the outer peripheral surface of the ring-like member may be provided, and the engaging portion may be provided in the hole. That is, a hole capable of accommodating the extension portion and the protruding portion of the coupling member may be formed in the end portion of the ring-like member. In this case, a slit(s) are formed on a periphery of an opening portion (tip ends or near of the end portion 18b and the other end portion 18c) of the hole.

Moreover, the shape and structure of the portable apparatus shown in the above-mentioned embodiment are mere examples, and unless user assistance structure constituted by the coupling member and the ring-like member is changed, it can be appropriately changed according to the actual product.

Although certain example devices and apparatuses have been described herein, it is to be understood that the appended claims are not to be limited to the devices and apparatuses disclosed, but on the contrary, are intended to cover various modifications and equivalent arrangements included within the scope of the appended claims.

## Claims

1. A user assistance device (100) to be provided on a portable apparatus (10), comprising:
a rotatable portion (16) configured to be rotated around a first axis (Axl) with respect to a housing (12) of the portable apparatus (10);
a first protruding portion (16b) and a second protruding portion (16b) configured to protrude from a predetermined side surface of the rotatable portion (16) in a direction intersecting the first axis (Ax1); and
a frame portion (18) configured to have a first engaging portion (182) with which the first protruding portion (16b) is engaged and a second engaging portion (182) with which the second protruding portion (16b) is engaged, and to be formed with a through hole (18a) through which a finger of a user who holds and/or uses the portable apparatus (10) can pass, wherein
the frame portion (18) is configured to be rotatable around a second axis with respect to the rotatable portion (16) in a state where the first engaging portion (182) is engaged with the first protruding portion (16b) and the second engaging portion (182) is engaged with the second protruding portion (16b).

2. The user assistance device (100) according to claim 1, wherein at least the first engaging portion (182) and the second engaging portion (182) of the frame portion (18) are formed of elastic material.

3. The user assistance device (100) according to claim 1, wherein each of the first engaging portion (182) and the second engaging portion (182) has a through hole shape or hole shape, and
material forming at least peripheral portions of the first engaging portion (182) and the second engaging portion (182) is elastically deformed more easily than material constituting the first protruding portion (16b) and the second protruding portion (16b).

4. The user assistance device (100) according to claim 1, wherein the first protruding portion (16b) is configured to have the first engaging portion (182) and a first disengagement prevention portion (164) for preventing the first protruding portion (16b) from coming off the first engaging portion (182), and the second protruding portion (16b) is configured to have the second engaging portion (182) and a second disengagement prevention portion (164) for preventing the second protruding portion (16b) from coming off the second engaging portion (182).

5. The user assistance device (100) according to claim 4, wherein the first disengagement prevention portion (164) is configured to have a diameter larger than a diameter of other part of the first protruding portion (16b), and the second disengagement prevention portion (164) is configured to have a diameter larger than a diameter of other part of the second protruding portion (16b).

6. The user assistance device (100) according to claim 4, wherein the first disengagement prevention portion (164) is provided near a tip end of the first protruding portion (16b), and the second disengagement prevention portion (164) is provided near a tip end of the second protruding portion (16b).

7. The user assistance device (100) according to claim 1, wherein the frame portion (18) is cut out at least a part of the frame portion (18) to have a first end portion (18b) and a second end portion,
the first engaging portion (182) is provided in the first end portion (18b), and the second engaging portion (182) is provided in the second end portion, and
the frame portion (18) is configured to have a first portion that is made to be gradually thinner as being separated from the first end portion (18b) and a second portion that is made to be gradually thinner as being separated from the second end portion.

8. The user assistance device (100) according to claim 7, wherein the frame portion (18) is configured to have a third portion near the first end portion (18b) and a fourth portion near the second end portion, the third portion and the fourth portion being made to be thicker than other portions except the third portion and the fourth portion of the frame portion (18), respectively.

9. The user assistance device (100) according to claim 1, wherein each of the first engaging portion (182) and the second engaging portion (182) is configured to be formed with a through hole or hole (182b), and an inner peripheral portion defining the through hole or hole (182b) is formed of elastic material.

10. The user assistance device (100) according to claim 9, wherein a diameter of the through hole or hole (182b) of the first engaging portion (182) is smaller than a diameter of the first protruding portion (16b) in a state where the first engaging portion (182) is not engaged with the first protruding portion (16b), and a diameter of the through hole or hole (182b) of the second engaging portion (182) is smaller than a diameter of the second protruding portion (16b) in a state where the second engaging portion (182) is not engaged with the second protruding portion (16b).

11. The user assistance device (100) according to claim 9, wherein at least a slit is formed in each of a periphery defining the through hole or hole (182b) of the first engaging portion (182) and a periphery defining the through hole or hole (182b) of the second engaging portion (182).

12. The user assistance device (100) according to claim 1, wherein the housing (12) is configured to have a first surface (124) and a second surface (126) perpendicular or substantially perpendicular to the first surface (124), and
the rotatable portion (16) is provided near the second surface (126) of the housing (12) within the first surface (124) of the housing (12).

13. The user assistance device (100) according to claim 1, wherein each of the first protruding portion (16b) and the second protruding portion (16b) is formed in a columnar or substantially columnar shape at least a part of each of the first protruding portion (16b) and the second protruding portion (16b).

14. The user assistance device (100) according to claim 1, wherein at least a part brought into contact to the housing (12) of the frame portion (18) is formed of elastic material.

15. The user assistance device (100) according to claim 1, wherein the first axis (Ax1) and the second axis are orthogonal or substantially orthogonal.

16. The user assistance device (100) according to claim 1, wherein the housing (12) includes an accommodation portion (12a) configured to accommodate at least a battery of the portable apparatus (10) and a lid (12b) attached to the accommodation portion (12a), and the rotatable portion (16) is provided on the lid (12b).

17. A portable apparatus (10) having the user assistance device (100) according to claim 1.
